# FASCICULE DE BREVET EUROPEEN

(11) **EP 2 988 934 B1**
(45) Date de publication et mention de la délivrance du brevet: **30.10.2019**
(21) Numéro de dépôt: 14726687.8
(22) Date de dépôt: 22.04.2014
(51) Int. Cl.: B32B 27/30, A01G 9/14, C08J 5/18, C08L 27/08, E04D 5/06

(54) **FILM A BASE DE POLYMERE FLUORE**
FOLIE AUS FLUORPOLYMER
FLUORPOLYMER FILM

(30) Priorité: 23.04.2013 FR 1353672; 03.04.2014 FR 1452980
(43) Date de publication de la demande: 02.03.2016
(73) Titulaire: Arkema France, 92700 Colombes (FR)
(72) Inventeur: DEVISME, Samuel, F-76000 Rouen (FR); RAMFEL (Epouse WIEGERT), Barbara, F-27170 Barc (FR); FINE, Thomas, 200135 Shanghai (CN); BONNET, Anthony, F-69720 Saint-laurent-de-mure (FR); ZERAFATI, Saeid, 19085 Villanova, PA Montgomery (US)
(74) Mandataire: Albani, Dalila
(86) Numéro de dépôt international: PCT/FR2014/050965
(87) Numéro de publication internationale: WO 2014/174197

(56) Documents cités:
- EP-A1- 0 884 358
- WO-A1-2006/045637
- WO-A1-2011/121228
- FR-A1- 2 935 706
- WILLIAM G. PERKINS: "Polymer toughness and impact resistance", POLYMER ENGINEERING & SCIENCE, vol. 39, no. 12, 1 décembre 1999 (1999-12-01), pages 2445-2460, XP055095484, ISSN: 0032-3888, DOI: 10.1002/pen.11632
- STACHURSKI Z H ET AL: "TEARING RESISTANCE OF MULTI LAYER PLASTIC FILMS", INTERNATIONAL JOURNAL OF FRACTURE, MARTINUS NIJHOFF PUBLISHERS, THE HAGUE, NL, vol. 68, no. 2, 1 janvier 2004 (2004-01-01), pages 141-150, XP008075169, ISSN: 0376-9429
- "GENIOPERL P52", , 16 octobre 2013 (2013-10-16), XP055123870, München Extrait de l'Internet: URL:http://sdb.wacker.com/pf/e/result/repo rt.jsp?P_LANGU=D&P_SYS=2&P_SSN=163120&P_RE P=00000000000000000004&P_RES=144538&P_SPEC =R [extrait le 2014-06-17]

## Description

La présente invention concerne un film fluoré possédant des propriétés le rendant apte à une utilisation à l'extérieur, notamment dans le domaine agricole comme films de couverture de serres (ou films de serre) ou sous forme de films translucides à insérer dans le corps des bâtiments, notamment des bâtiments agricoles. Le film selon l'invention comprend une matrice de polyfluorure de vinylidène et au moins un modifiant choc,

Une serre est une structure qui peut être parfaitement close destinée en général à la production agricole, en soustrayant aux éléments climatiques les cultures vivrières pour en accélérer la croissance ou les produire indépendamment des saisons. La couverture est translucide et généralement en verre, mais aussi en matière plastique (par exemple: film en polyéthylène, plaques semi-rigides en PVC) rigide ou souple, généralement traité pour résister aux ultraviolets. Ce film peut être armé pour augmenter sa résistance aux déchirements.

De façon générale, les films de serre doivent présenter de multiples propriétés :
- mécaniques, telles que : résistance à la déchirure dans une gamme de température de - 20°C à +60°C, résistance au fluage, capacité d'étirage;
- optiques, telles que la transmission de la lumière visible, résistance aux rayons UV ;
- de résistance chimique, notamment aux pesticides ;
- de durabilité : résistance à la chaleur humide et au froid ;
- de résistance thermique : capacité élevée à réfléchir les rayons infrarouges dans la serre durant la nuit en conservant l'énergie thermique à l'intérieur ;
Optionnellement, les films de serre peuvent présenter des propriétés additionnelles :
- de résistance au feu ;
- propriétés antibuée,
- de résistance à la salissure.

Il est connu d'employer des polymères fluorés, notamment à base de fluorure de vinylidène, pour fabriquer des films monocouche pour des applications agricoles. Les films monocouche à base de PVDF (poly fluorure de vinylidène) ou de copolymères VDF/HFP (fluorure de vinylidène / hexafluoropropylène), obtenus par soufflage de gaine ou par la technique du film coulé, présentent de bonnes propriétés mécaniques, optiques, résistance chimique et durabilité, si bien que ce sont de bons candidats pour l'application serres agricoles. La résistance à la déchirure de ces films est toutefois insuffisante, surtout dans le sens d'extrusion (MD).

Le document WO 2011/121228 décrit des films fluorés multicouches comprenant au moins 3 couches, dont une couche A en un premier copolymère de fluorure de vinylidène ayant une température de cristallisation TcA, et une couche B en un deuxième copolymère de fluorure de vinylidène ayant une température de cristallisation TcB, TcA étant supérieure à TcB, les couches A et B étant alternes, la couche A étant placée à l'extérieur et la couche B entre deux couches A. La résistance à la déchirure de ces films a été significativement améliorée, par rapport à aux films fluorés connus, cependant elle reste insuffisante à basse température.

Le document WO 2006/045637 décrit une composition comprenant, le total étant 100%: à 30% en poids d'un mélange comprenant: un polyéthylène portant des fonctions époxy, un modifiant choc choisi parmi les élastomères et les polyéthylènes de très basse densité, ledit modifiant choc étant en tout ou partie fonctionnalisé, à 70% en poids d'un mélange comprenant: un polymère fluoré et un polymère fluoré fonctionnalisé. Des structures monocouche ou multicouche sont fabriquées à partir de cette composition, pour faire des dispositifs de stockage ou de transfert de fluides en particulier dans les automobiles et les poids lourds.

Le document EP 884358 décrit une composition souple et résiliente comprenant : au moins un homopolymère (A) de fluorure de vinylidène (VF2) ou un copolymère (A) de VF2 et d'au moins un autre monomère copolymérisable avec VF2, au moins un élastomère B choisi parmi les élastomères vrais et les élastomères thermoplastiques et au moins un plastifiant C. Cette composition est adaptée pour la fabrication de gaines d'étanchéité de conduites métalliques flexibles pour l'extraction et/ou le transport de gaz et d'hydrocarbures dans les industries pétrolière et gazière.

Il serait donc souhaitable de disposer de films fluorés pour application comme couverture de serre qui, en plus des caractéristiques générales exposées plus haut, présentent de bonnes propriétés de résistance à la déchirure dans une gamme de températures allant de - 20°C à +60°C.

D'autres applications concernent les toitures des bâtiments, notamment des bâtiments d'élevage, qui doivent laisser diffuser la lumière, contribuant ainsi au bien-être des animaux par une répartition harmonieuse de la lumière naturelle.

Il a maintenant été trouvé qu'en modifiant un polymère de polyfluorure de vinylidène par ajout de modifiant choc de type cœur - écorce, on obtient une amélioration significative de la résistance à la déchirure du film, notamment à basse température, tout en conservant un niveau de transmission dans le domaine visible, et un niveau de résistance au feu, compatibles avec l'utilisation du film comme film de couverture de serres, ou, d'une manière plus générale, comme film pour les bâtiments agricoles.

Un des objets de la présente invention consiste en un film monocouche en PVDF modifié par ajout d'au moins un modifiant choc de type cœur - écorce (« coreshell »).

Un autre objet de l'invention concerne un film multicouche comprenant au moins une couche de PVDF modifié avec au moins un modifiant choc de type cœur - écorce, et au moins une couche de PVDF non-modifié, c'est-à-dire un PVDF qui ne contient pas de modifiant choc (appelé ci-après «couche de PVDF »).

Un autre objet de l'invention concerne l'utilisation des films selon l'invention comme matériaux de couverture agricole notamment comme couverture de serres ou de bâtiments.

D'autres caractéristiques et avantages de l'invention apparaîtront à la lecture de l'exposé qui suit.

Selon un premier aspect, l'invention concerne un film polymère monocouche comprenant une matrice de polyfluorure de vinylidène (PVDF) et au moins un modifiant choc, dans lequel le taux massique de modifiant choc varie entre 2,5% et moins de 40%. L'épaisseur du film est située entre 30 et 200 microns, de préférence entre 80 et 150 microns (bornes comprises).

Selon un mode de réalisation, le taux de modifiant choc est supérieur à 5% et inférieur ou égal à 30%.

Selon un mode de réalisation, le film monocouche selon l'invention est constitué d'une matrice de PVDF et d'au moins un modifiant choc cœur - écorce.

La répartition des épaisseurs en pourcentage de l'épaisseur finale de la structure est la suivante : couche PVDF modifiée : 20%-95%, couche de PVDF non modifiée : 5%-80%, soit par exemple pour une épaisseur totale de 30 microns et une répartition 70/30: couche PVDF modifiée: 21 microns et couche PVDF non modifiée: 9 microns.

Selon un deuxième aspect, l'invention a trait à un film multicouche comprenant au moins une couche du film monocouche décrit et au moins une autre couche de PVDF. Dans le cas d'un film multicouche l'épaisseur globale est située entre 30 et 200 microns. Selon un mode de réalisation, le film multicouche est constitué d'une couche centrale de PVDF modifié avec un modifiant choc cœur - écorce, et de deux couches externes en PVDF. Ces dernières peuvent avoir la même structure, ou bien elles peuvent avoir des structures différentes.

La matrice de PVDF est constituée d'un PVDF homopolymère ou d'un copolymère préparé par copolymérisation du fluorure de vinylidène (VDF, CH₂=CF₂) avec un comonomère fluoré choisi parmi : le fluorure de vinyle; le trifluoroéthylène (VF3); le chlorotrifluoroethylène (CTFE); le 1,2-difluoroéthylène; le tetrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD).

De préférence le comonomère fluoré est choisi parmi le chlorotrifluoroéthylène (CTFE), l'hexafluoropropylène (HFP), le trifluoroéthylène (VF3) et le tétrafluoroéthylène (TFE), et leurs mélanges.

Le comonomère est avantageusement l'HFP. De préférence, le copolymère ne comprend que du VDF et de l'HFP.

De préférence, les copolymères fluorés sont des copolymères de VDF comme le VDF-HFP contenant au moins 50% en masse de VDF, avantageusement au moins 75% en masse de VDF et de préférence au moins 80% en masse de VDF. On peut citer par exemple plus particulièrement les copolymères de VDF contenant plus de 75% de VDF et le complément de HFP commercialisés par la société ARKEMA sous le nom KYNAR FLEX®.

Le modifiant choc coeur-écorce se présente, selon un mode de réalisation, sous la forme de fines particules ayant un cœur en élastomère (ayant une température de transition vitreuse inférieure à 25°C, de préférence inférieure à 0°C, de préférence encore inférieure à -5°C, de manière encore plus préférée inférieure à -25°C), et au moins une écorce thermoplastique (comprenant au moins un polymère ayant une température de transition vitreuse supérieure à 25°C). La taille des particules est en général inférieure au micron et avantageusement comprise entre 50 et 300 nm.

Selon un mode de réalisation, le modifiant choc contient un cœur en copolymère acrylate-polysiloxane et une écorce en résine dure. Dans ce cas, le cœur est un matériau de type caoutchouc flexible préparé par polymérisation d'un ou plusieurs monomères vinyliques en présence d'un polymère de type caoutchouc obtenu à partir de monomères comme les acrylates d'alkyle ou les méthacrylates d'alkyle, dans lesquels le groupe alkyle contient de 2 à 10 atomes de carbone. Des monomères polyfonctionnels tels que divinylbenzène, éthylène diméthacrylate, triallyl cyanurate, ou triallyl isocyanurate peuvent être rajouté au cours de la polymérisation comme des agents réticulants. Le polymère de type caoutchouc ainsi obtenu est combiné avec un caoutchouc contenant du polysiloxane. Les élastomères ainsi préparés contiennent au moins 20% en poids de polymère de type caoutchouc, de préférence au moins 40% en poids. Des exemples de ce type de modifiant choc sont les copolymères greffés à base de caoutchouc préparés par copolymérisation par greffage d'un caoutchouc composite avec au moins un monomère vinylique, dans lesquels le caoutchouc composite comprend de 5 à 95% en poids d'un caoutchouc à base de polysiloxane et de 5 à 95% en poids d'un caoutchouc polyacryl(méth)acrylate. La taille des particules de ces modifiants-choc varie entre 0,01 et 1 micron. Des produits de ce type sont commercialisés par Mitsubishi Rayon sous la référence Metablen® S-2001.

Selon un autre mode de réalisation le modifiant choc est composé d'un cœur de poly(organo-siloxane) et d'une écorce de résine thermoplastique. Les groupements organiques des cœurs poly(organo-siloxane) sont préférentiellement des radicaux alkyle ou vinyle contenant entre 1 et 18 carbones, avantageusement entre 1 et 6 carbones, ou des radicaux aryle ou des hydracarbones substitués. Le poly(organo-siloxane) contient un ou plusieurs de ces groupements. Les siloxanes ont un degré de fonctionnalisation variable qui définit le taux de réticulation du poly(organo-siloxane). Préférentiellement le degré de fonctionnalisation moyen est compris entre 2 et 3 formant ainsi un cœur partiellement réticulé. L'écorce est formée de polymères ou de copolymères issus de monomères tels que les acrylates ou méthacrylate d'alkyle, l'acrylonytrile, le styrène, le vinylstyrène, le vinyl propionate maleimide, le chlorure de vinyle, l'éthylène, le butadiène, l'isoprène et le chloroprène. Préférentiellement, l'écorce est composée de styrène ou d'acrylate ou de méthacrylate d'alkyle, l'alkyle possédant entre 1 et 4 carbones. La fraction du cœur représente entre 0,05 et 90% en poids des particules, préférentiellement entre 60 et 80% en poids. La taille des particules est comprise entre 10 et 400 nm. Ce modifiant choc peut aussi se présenter sous la forme d'un cœur entouré de 2 écorces successives. La description du cœur et de l'écorce extérieure reste identique à celle des modifiants chocs siliconés à une seule écorce précédemment présentés. L'écorce intermédiaire est constituée d'un poly(organo-siloxane) différent de celui du cœur mais choisi dans la même famille de composition. A titre d'exemple de ce type de modifiant choc, les produits de la gamme Genioperl® de Wacker Silicones peuvent être cités.

Le film monocouche selon l'invention peut contenir au moins un additif choisi parmi : les agents matifiants, les réfléchissants infrarouge, les agents opacifiants, les plastifiants ou les pigments nacrés.

Selon un autre aspect, l'invention concerne les procédés de préparation de films décrits ci-dessus. Selon un mode de réalisation, les mélanges PVDF / coreshell sont obtenus par des techniques de compoundage en milieu fondu connu de l'homme de l'art, comme le BUSS ou la bivis. Selon un autre mode de réalisation, les mélanges PVDF / coreshell sont préparés par le mélanges des latex respectifs. Les films sont ensuite obtenus par soufflage de gaine ou par la technique du film coulé, ces techniques permettant avantageusement d'obtenir des films de largeurs importantes. Les films peuvent être extrudés à une température comprise entre 200 et 280°C. Le taux de gonflage doit être compris entre 1,2 et 4, de préférence entre 1,5 et 3. Le taux d'étirage doit lui être compris entre 2 et 15, de préférence entre 5 et 10.

Selon un autre aspect, l'invention concerne l'utilisation du film monocouche ou du film multicouche comprenant une couche dudit film monocouche, comme matériau de couverture de serre agricole. L'utilisation d'une couche de polymère fluoré modifié selon l'invention, dans cette application, permet d'augmenter la durabilité du film de couverture et sa résistance à la déchirure sans d'autres ajouts.

Selon un autre aspect, l'invention concerne l'utilisation du film monocouche ou du film multicouche comprenant au moins une couche dudit film monocouche, comme matériau pour la fabrication de films pour les toitures et/ou façades de bâtiments, notamment des bâtiments agricoles comme les bâtiments d'élevage. Ces films de serre présentent alors l'avantage d'avoir une durabilité améliorée combinée à une excellente transparence aux UV.

### Exemple de structures

Les compounds sont réalisés selon les règles de l'art sur une extrudeuse bivis co-rotative équipée d'une filière dont la température est fixée à 240°C. Les films sont ensuite réalisés par soufflage de gaine sur une ligne laboratoire 5 couches disposant d'une filière pancake (diamètre 50mm, entrefer 1,2mm). La vitesse d'étirage est de 3 m/mn, le taux de gonflement (BUR) de 2,8. L'épaisseur de tous les films est fixée à 100µm.

### Matériaux de l'étude

**PE :** LDPE Exxon LD165BW1, MI (190°C, 2,16kg) = 1
**PVDF:** est un copolymère de fluorure de vinilydène et HFP ayant un MFR de 5 g/10min (230°C; 5kg), une température de fusion (Tf) de 142°C et un module de Young de 650 MPa à 23°C. La Tf a été mesurée par DSC ou calorimétrie différentielle à balayage. Les modules élastiques ont été mesurés selon la norme ISO 178.
**CS** : Genioperl® P52 de la société Wacker contenant un cœur de polydiméthyle siloxane enrobé d'une écorce de polyméthacrylate de méthyle. Le diamètre de ces particules est de l'ordre de 150 nm.

Les tests réalisés sont les suivants :
- caractérisation de la résistance à la déchirure à froid : un film est placé dans un cadre et mis sous une tension de 1N. Le test consiste à faire tomber d'une hauteur de 30 cm un percuteur à l'embout conique et de masse 1kg. Ce test est réalisé dans une enceinte climatique et le caractère ductile ou fragile de la déformation est déduit du profil de rupture observé sur le film après perforation.
- les propriétés optiques des films ont été déterminées en mesurant la transmittance dans le domaine du visible, ainsi que le niveau de trouble ou haze. La transmittance des films a été évaluée entre 400 nm et 740 nm selon la norme ASTM D1003 avec un illuminant C sous 2° à l'aide d'un spectrocolorimètre CM-3610d de chez Minolta.

La résistance au feu des films est déterminée selon la norme NF P92-503 qui découle sur un classement des films sur une échelle allant de M0 (incombustible) à M5 (très facilement inflammable). Le test consiste à exposer le film à une flamme et à mesurer :
- la durée de persistance de flamme après retrait de la source d'ignition ;
- la longueur et la largeur de film brûlé ;
- la présence de gouttes enflammées.

Dans la gamme de résistance dans laquelle se trouvent les films PVDF, une persistance de flamme supérieure à 5 secondes entraine un déclassement d'un niveau (de M1 à M2). De même, la présence de gouttelettes enflammées, une longueur moyenne détruite supérieure à 35cm ou une largeur supérieure à 9cm entraine chacun un déclassement supplémentaire.

Les résultats sont présentés dans le Tableau 1.

Ces résultats montrent que l'ajout de modifiant choc cœur - écorce à la matrice de PVDF permet d'améliorer significativement la résistance du film fluoré à la déchirure, comparativement au film sans modifiant choc.

Cette amélioration des propriétés mécaniques se fait avec un impact limité sur la transmittance du film grâce à la proximité des indices de réfraction de l'additif et de la matrice. Ce modifiant choc étant aussi peu inflammable, la résistance au feu du film reste importante.

**Tableau 1**

| Matrice | Taux de CS (%) | Transmittance (%) | Température de transition ductile fragile (°C) | Résistance au feu |
|---|---|---|---|---|
| PE | 0 | 93 | < -20°C | M4 |
| PVDF | 0 | 93 | 0°C | M1 |
| PVDF | 10 | 88 | < -20°C | M2 |

## Revendications

1. Film polymère monocouche comprenant une matrice de polyfluorure de vinylidène (PVDF) et au moins un modifiant choc cœur - écorce ayant un cœur de poly(organo-siloxane) et au moins une écorce thermoplastique, dans lequel le taux massique de modifiant choc varie entre 2,5% et moins de 40%.

2. Film selon la revendication 1 dans lequel le taux massique de modifiant choc est supérieur à 5% et inférieur ou égal à 30%.

3. Film selon l'une des revendications 1 et 2 dans lequel la matrice de PVDF est constituée d'un PVDF homopolymère ou d'un copolymère préparé par copolymérisation du fluorure de vinylidène avec un comonomère fluoré choisi parmi : le fluorure de vinyle; le trifluoroéthylène; le chlorotrifluoroethylène le 1,2-difluoroéthylène; le tetrafluoroéthylène; l'hexafluoropropylène; les perfluoro(alkyl vinyl) éthers choisis parmi le perfluoro(méthyl vinyl)éther, le perfluoro(éthyl vinyl) éther (PEVE) et le perfluoro(propyl vinyl) éther; le perfluoro(1,3-dioxole); et le perfluoro(2,2-diméthyl-1,3-dioxole).

4. Film selon l'une des revendications 1 à 3 dans lequel ledit cœur de poly(organo-siloxane) contient un ou plusieurs des groupements choisis parmi les radicaux alkyle ou vinyle contenant entre 1 et 18 carbones, avantageusement entre 1 et 6 carbones, les radicaux aryle et les hydracarbones substitués.

5. Film selon l'une des revendications 1 à 4 dans lequel ledit cœur est réticulé en tout ou partie.

6. Film selon la revendication 5 dans lequel le degré de fonctionnalisation moyen du cœur est compris entre 2 et 3.

7. Film selon l'une des revendications 1 à 6 dans lequel l'écorce ou les écorces sont des polymères ou copolymères formés de monomères choisi parmi les acrylates ou méthacrylate d'alkyle, l'acrylonytrile, le styrène, le vinylstyrène, le vinyl propionate maleimide, le chlorure de vinyle, l'éthylène, le butadiène, l'isoprène et le chloroprène.

8. Film selon la revendication 7 dans lequel l'écorce ou les écroces sont des homopolymères du styrène, d'un alkylstyrène ou du méthacrylate de méthyle ou des copolymères comprenant au moins 70% en moles de l'un de ces monomères précédents et au moins un comonomère choisi parmi les monomères restants, un autre (méth)acrylate d'alkyle, l'acétate de vinyle et l'acrylonitrile.

9. Film selon l'une quelconque des revendications précédentes ayant une épaisseur située entre 30 et 200 microns, de préférence entre 80 et 150 microns.

10. Film selon l'une quelconque des revendications précédentes dans lequel fa fraction du cœur dans le modifiant choc représente entre 0,05 et 90% en poids, préférentiellement entre 60 et 80% en poids.

11. Film selon l'une quelconque des revendications précédentes, ledit film contenant au moins un additif choisi parmi : les agents matifiants, les réfléchissants infrarouge, les agents opacifiants, les plastifiants ou les pigments nacrés.

12. Film multicouche comprenant au moins une couche d'un film selon l'une quelconque des revendications 1 à 11 et au moins une couche de PVDF.

13. Film selon la revendication 12 consistant en une couche interne selon l'une des revendications 1 à 11 et deux couches externes de PVDF, lesdites couches externes ayant une structure identique ou différente.

14. Utilisation du film selon l'une des revendications 1 à 11 ou du film selon l'une des revendications 12 ou 13 comme matériau de couverture agricole notamment comme couverture de serres.

15. Utilisation du film selon l'une des revendications 1 à 11 ou du film selon l'une des revendications 12 ou 13 comme matériau pour la fabrication de films pour les toitures et/ou façades de bâtiments, notamment des bâtiments agricoles comme les bâtiments d'élevage.

## Patentansprüche

1. Einschichtige Polymerfolie, umfassend eine Polyvinylidenfluorid(PVDF)-Matrix und mindestens einen Kern-Schale-Schlagzähigkeitsmodifikator mit einem Poly(organosiloxan)-Kern und mindestens einer thermoplastischen Schale, wobei der Massenanteil an Schlagzähigkeitsmodifikator zwischen 2,5 und weniger als 40 % variiert.

2. Folie nach Anspruch 1, wobei der Massenanteil an Schlagzähigkeitsmodifikator größer als 5 % und kleiner oder gleich 30 % ist.

3. Folie nach einem der Ansprüche 1 und 2, wobei die PVDF-Matrix aus einem PVDF-Homopolymer oder einem durch Copolymerisation von Vinylidenfluorid mit einem fluorierten Comonomer, das aus Vinylfluorid; Trifluorethylen; Chlortrifluorethylen; 1,2-Difluorethylen; Tetrafluorethylen; Hexafluorpropylen; Perfluor(alkylvinyl)ethern, die aus Perfluor(methylvinyl)ether, Perfluor(ethyl-vinyl)ether (PEVE) und Perfluor(propylvinyl)ether ausgewählt sind; Perfluor(1,3-dioxol) und Perfluor(2,2-dimethyl-1,3-dioxol) ausgewählt ist, hergestellten Copolymer besteht.

4. Folie nach einem der Ansprüche 1 bis 3, wobei der Poly(organosiloxan)-Kern eine oder mehrere Gruppen enthält, die aus Alkyl- oder Vinylresten mit zwischen 1 und 18 Kohlenstoffatomen, vorteilhafterweise zwischen 1 und 6 Kohlenstoffatomen, Arylresten und Kohlenwasserstoffen, die substituiert sind, ausgewählt sind.

5. Folie nach einem der Ansprüche 1 bis 4, wobei der Kern ganz oder teilweise vernetzt ist.

6. Folie nach Anspruch 5, wobei der mittlere Funktionalisierungsgrad des Kerns zwischen 2 und 3 liegt.

7. Folie nach einem der Ansprüche 1 bis 6, wobei es sich bei bei der Schale bzw. den Schalen um Polymere oder Copolymere aus Monomeren, die aus Alkylacrylaten oder -methacrylaten, Acrylnitril, Styrol, Vinylstyrol, Vinylpropionat, Maleinimid, Vinylchlorid, Ethylen, Butadien, Isopren und Chloropren ausgewählt sind, handelt.

8. Folie nach Anspruch 7, wobei es sich bei der Schale bzw. den Schalen um Homopolymere von Styrol, einem Alkylstyrol oder Methylmethacrylat oder Copolymere, die mindestens 70 Mol-% eines dieser vorhergehenden Monomere und mindestens ein aus den übrigen Monomeren, einem anderen Alkyl(meth)acrylat, Vinylacetat und Acrylnitril ausgewähltes Comonomer umfassen.

9. Folie nach einem der vorhergehenden Ansprüche mit einer Dicke zwischen 30 und 200 Mikron, vorzugsweise zwischen 80 und 150 Mikron.

10. Folie nach einem der vorhergehenden Ansprüche, wobei der Anteil des Kerns in dem Schlagzähigkeitsmodifikator zwischen 0,05 und 90 Gew.-%, vorzugsweise zwischen 60 und 80 Gew.-%, ausmacht.

11. Folie nach einem der vorhergehenden Ansprüche, wobei die Folie mindestens ein Additiv enthält, das aus Mattierungsmitteln, Infrarotreflektoren, Trübungsmitteln, Weichmachern oder Perlglanzpigmenten ausgewählt ist.

12. Mehrschichtige Folie, umfassend mindestens eine Schicht aus einer Folie nach einem der Ansprüche 1 bis 11 und mindestens eine PVDF-Schicht.

13. Folie nach Anspruch 12, bestehend aus einer Innenschicht nach einem der Ansprüche 1 bis 11 und zwei PVDF-Außenschichten, wobei die Außenschichten eine gleiche oder verschiedene Struktur aufweisen.

14. Verwendung der Folie nach einem der Ansprüche 1 bis 11 oder der Folie nach Anspruch 12 oder 13 als Landwirtschaftsabdeckungsmaterial, insbesondere als Gewächshausabdeckung.

15. Verwendung der Folie nach einem der Ansprüche 1 bis 11 oder der Folie nach Anspruch 12 oder 13 als Material für die Herstellung von Folien für Dächer und/oder Fassaden von Gebäuden, insbesondere Landwirtschaftsgebäuden wie Ställen.

## Claims

1. A monolayer polymer film comprising a polyvinylidene fluoride (PVDF) matrix and at least one core-shell impact modifier having a poly(organosiloxane) core and at least one thermoplastic shell, in which the content by weight of impact modifier varies between 2.5% and less than 40%.

2. The film as claimed in claim 1, in which the content by weight of impact modifier is greater than 5% and less than or equal to 30%.

3. The film as claimed in either of claims 1 and 2, in which the PVDF matrix is composed of a PVDF homopolymer or of a copolymer prepared by copolymerization of vinylidene fluoride with a fluorinated comonomer chosen from: vinyl fluoride; trifluoroethylene; chlorotrifluoroethylene; 1,2-difluoroethylene; tetrafluoroethylene; hexafluoropropylene; perfluoro(alkyl vinyl) ethers chosen from perfluoro(methyl vinyl) ether, perfluoro(ethyl vinyl) ether (PEVE) and perfluoro(propyl vinyl) ether; perfluoro(1,3-dioxole); and perfluoro(2,2-dimethyl-1,3-dioxole).

4. The film as claimed in one of claims 1 to 3, in which said poly(organosiloxane) core comprises one or more groups chosen from alkyl or vinyl radicals comprising between 1 and 18 carbons, advantageously between 1 and 6 carbons, aryl radicals and hydrocarbons which are substituted.

5. The film as claimed in one of claims 1 to 4, in which said core is crosslinked in all or part.

6. The film as claimed in claim 5, in which the mean degree of functionalization of the core is between 2 and 3.

7. The film as claimed in one of claims 1 to 6, in which the shell or shells are polymers or copolymers formed of monomers chosen from alkyl acrylates or methacrylates, acrylonitrile, styrene, vinylstyrene, vinyl propionate, maleimide, vinyl chloride, ethylene, butadiene, isoprene and chloroprene.

8. The film as claimed in claim 7, in which the shell or shells are homopolymers of styrene, an alkylstyrene or methyl methacrylate or copolymers comprising at least 70 mol% of one of these preceding monomers and at least one comonomer chosen from the remaining monomers, another alkyl (meth)acrylate, vinyl acetate and acrylonitrile.

9. The film as claimed in any one of the preceding claims, having a thickness located between 30 and 200 microns, preferably between 80 and 150 microns.

10. The film as claimed in any one of the preceding claims, in which the fraction of the core in the impact modifier represents between 0.05 and 90% by weight, preferably between 60 and 80% by weight.

11. The film as claimed in any one of the preceding claims, said film comprising at least one additive chosen from: matifying agents, infrared reflecting agents, opacifying agents, plasticizers or pearlescent pigments.

12. A multilayer film comprising at least one layer of a film as claimed in any one of claims 1 to 11 and at least one PVDF layer.

13. The film as claimed in claim 12, consisting of an internal layer as claimed in one of claims 1 to 11 and two external PVDF layers, said external layers having an identical or different structure.

14. The use of the film as claimed in one of claims 1 to 11 or of the film as claimed in either of claims 12 and 13 as agricultural covering material, in particular as covering for greenhouses.

15. The use of the film as claimed in one of claims 1 to 11 or of the film as claimed in either of claims 12 and 13 as material for the manufacture of films for the roofs and/or facades of buildings, in particular agricultural buildings, such as livestock buildings.
